# FASCICULE DE BREVET EUROPEEN

(11) **EP 0 340 278 B1**
(45) Date de publication et mention de la délivrance du brevet: **30.06.1993**
(21) Numéro de dépôt: 88909782.0
(22) Date de dépôt: 25.10.1988
(51) Int. Cl.: A01K 15/00

(54) **COLLIER ANTI-ABOIEMENTS**
VON SCHALL BEEINFLUSSTE EINRICHTUNG, UM HUNDE ZU DRESSIEREN
ANTI-BARKING COLLAR

(30) Priorité: 13.11.1987 FR 8716043
(43) Date de publication de la demande: 08.11.1989
(73) Titulaire: Vinci, René, 66000 Perpignan (FR)
(72) Inventeur: Vinci, René, 66000 Perpignan (FR)
(74) Mandataire: Arbousse-Bastide, Jean-Claude P.
(86) Numéro de dépôt international: FR8800521
(87) Numéro de publication internationale: WO8904117

(56) Documents cités:
- FR-A- 2 222 941
- US-A- 2 741 224
- US-A- 3 608 524
- US-A- 3 823 691
- US-A- 4 180 013
- US-A- 4 627 385

## Description

La présente invention a pour objet un dispositif destiné à empêcher les aboiements d'un chien.

On sait que nombre de chiens domestiques vivent à proximité des habitations, voire même en ville, dans des appartements. Cette cohabitation avec les humains pose divers problèmes, notamment en ce qui concerne les aboiements des chiens. Lorsqu'un chien se met à aboyer de façon prolongée, de jour ou même de nuit, il en résulte pour le voisinage une nuisance importante, qui donne parfois lieu à de sérieux litiges.

On a donc cherché à réaliser un dispositif susceptible de dissuader un chien d'aboyer.

Les dispositifs connus de ce genre utilisent des moyens particulièrement cruels. Pour certains, dès que l'appareil détecte un aboiement, il émet des ultra-sons que le chien perçoit de façon douloureuse. D'autres appareils connus consistent à appliquer au chien une décharge électrique, dès que les aboiements sont détectés.

Un dispositif d'un autre type, décrit dans le document US-A-4 627 385, comprend un capteur de sons adapté à détecter les aboiements du chien et à émettre alors un signal électrique qui actionne la valve d'un réservoir contenant une substance spéciale destinée à être vaporisée dans l'atmosphère au voisinage de la tête du chien, en vue de l'incommoder par une odeur désagréable.

Toutefois ce dispositif présente l'inconvénient que la substance spéciale qu'il met en oeuvre, et qui est généralement de l'essence de citronnelle, n'incommode pas nécessairement tous les chiens, et que d'autre part, lorsque le chien séjourne dans un véhicule, ses tentatives d'aboiements répétées génèrent des vaporisations répétées de ladite substance spéciale qui finissent par incommoder les passagers du véhicule.

La présente invention a pour but d'éviter ces divers inconvénients des dispositifs connus en proposant un dispositif qui dissuade efficacement un chien d'aboyer, par des moyens non douloureux pour le chien et non susceptibles d'incommoder son entourage, ledit dispositif présentant les caractéristiques exposées dans la partie caractérisante de la revendication 1.

Le dispositif selon l'invention, destiné à être fixé à un collier porté par le chien, comporte ainsi un capteur de sons capable de détecter les aboiements du chien et d'émettre alors un signal électrique, et des moyens qui, lorsqu'ils sont actionnés par le signal électrique, abaissent brusquement la température d'au moins un élément disposé au contact de la peau du chien, soumettant le chien, à cet endroit, à une vive sensation de froid qui provoque l'arrêt de ses aboiements.

Suivant une caractéristique de l'invention, les éléments au contact de la peau du chien sont constitués par une buse d'éjection d'une substance disposée dans un réservoir fixé au collier du chien, et par la substance elle-même.

Bien entendu, on ne quitterait pas le cadre de l'invention , en prévoyant plusieurs buses.

Suivant une autre caractéristique de l'invention ,la substance est contenue dans un réservoir sous pression incorporé au collier , cette substance étant un liquide très volatile se trouvant dans le réservoir sous formme liquide en équilibre avec sa vapeur dont la pression détermine la pression dans le réservoir.

Suivant une autre caractéristique de l'invention , les moyens permettant d'abaisser la température de la buse et de la substance sont constitués par une électrovalve , un ajutage et la substance sous pression dans le réservoir , l'ensemble étant incorporé au collier du chien.

lorsque la présence du signal électrique provoque le fonctionnement de l'électrovalve , celle-ci met en communication le réservoir contenant la substance et l'ajutage.

La substance s'échappe alors du réservoir par l'ajutage et la buse . Sa détente et sa vaporisation abaissent sa température et celle de la buse.

Suivant une autre caractéristique de l'invention , la détente de la substance à travers l'ajutage et son écoulement par la buse génèrent un bruit audible par le chien . L'écoulement de la substance sur la peau du chien constitue une sensation perçue par le chien.

Suivant une autre caractéristique de l'invention , l'ensemble du dispositif comprend un circuit electronique et une pile électrique d'alimentation.

Suivant une autre caractéristique de l'invention , le circuit électronique comprend les éléments suivants :
- un microphone recevant les bruits extérieurs et notamment les aboiements du chien ;
- un dispositif de réglage de la sensibilité du microphone ;
- un amplificateur à bande étroite n'amplifiant que les fréquences correspondant aux aboiements ;
- un relais ;
- la bobine de l'electrovalve .

Suivant une autre caractéristique de l'invention ,le relais est actionné par le fonctionnement d'un récepteur radio incorporé au collie , lorsqu'il est excité par l'émission d'un émetteur radio ,lui-même actionné par un dresseur , lui permettant ainsi de commencer à distance le dressage du chien.

Le dessin annexé , donné à titre d'exemple non limitatif ,permettra de mieux comprendre les caractéristiques de l'invention .
Figure 1 montre l'appareil porté par un chien , pour empêcher ses aboiements.
Figure 2 montre la réalisation pratique de l'appareil , sous la forme d'un coffret miniaturisé.
Figure 3 est un schéma-blocs illustrant le câblage électronique d'un dispositif selon l'invention.
Figure 4 est une coupe suivant IV - IV (figure 1) ,montrant le contenu du coffret.
Figure 5 est une coupe suivant V - V (figure 6).
Figure 6 est une vue extérieure suivant la direction de la fléche VI( figure 4).
Figure 7 montre l'utilisation de l'appareil pour le dressage d'un chien .

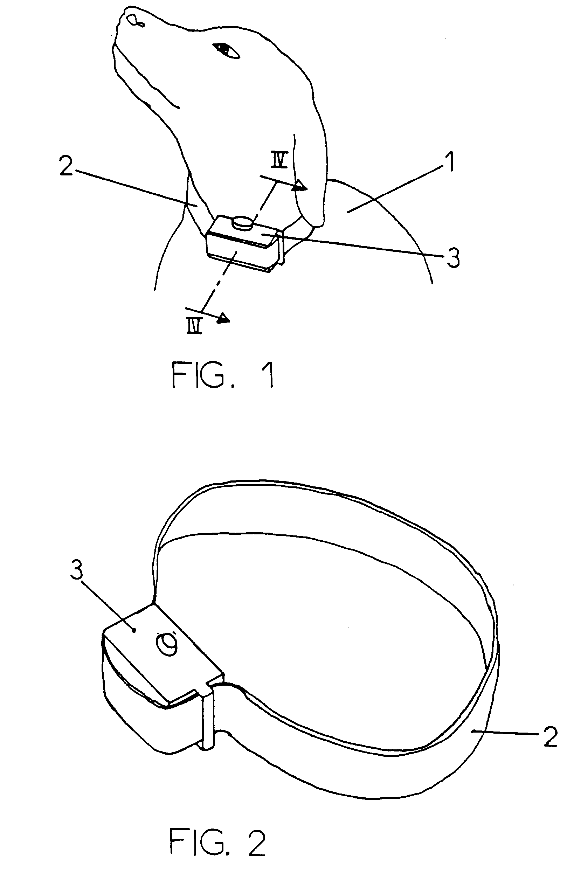

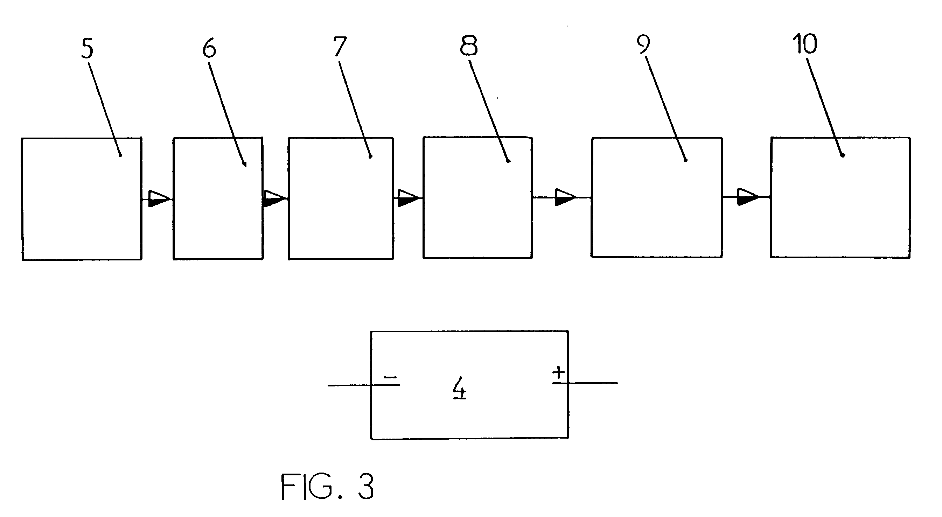

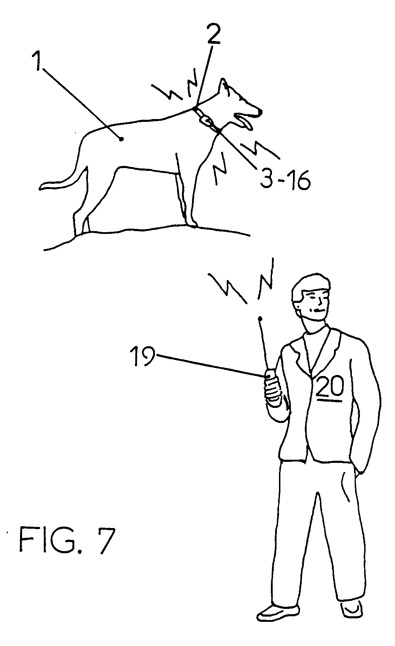

On a représenté sur les figures 1 et 7 un chien 1 , qui porte autour du cou un collier 2 selon l'invention .Ce collier 2 maintient en place un coffret ou boîtier 3 , dont le contenu correspond au schéma électronique de la figure 3 .

En particulier , le schéma comprend une pile d'alimentation 4 , montée de façon interchangeable Un microphone 5 capte les aboiements du chien 1 et génère un signal électrique . Celui-ci traverse un filtre 6 destiné à ne prendre que l'aboiement . Un amplificateur à seuil 7 délivre un signal seulement si le bruit reçu par le microphone 5 est assez intense . Le seuil de bruit ainsi défini par l'amplificateur 7 est réglable . Le signal issu de l'amplificateur 7 commande un circuit calibrateur 8 qui délivre un signal de durée déterminée et réglable . Celui-ci commande un circuit de puissance 9 , capable d'envoyer dans la bobine 10 d'une électrovanne 11 , un courant suffisant pour actionner le noyau magnétique de cette électro-vanne 11 , pendant le temps fixé par le calibrateur 8 . Le contenu d'un réservoir sous pression 12 est alors mis en communication avec un ajutage 13. La substance 14 contenue dans le réservoir 12 se détend alors par l'ajutage 13 et s'échappe par une buse 15 ,tout ou en partie vaporisée , et donc refroidie . Venant en contact direct avec la peau du chien, elle continue de se vaporiser . La buse aussi refroidie et appliquée par le collier sur la peau du chien 1 contribue à la sensation de froid.

Si la substance utilisée est jugée agressive pour la peau du chien , on évite de la projeter sur la peau par une forme particulière de la buse 15 , la sensation de froid étant alors uniquement provoquée par le contact de la buse 15 avec la peau du chien 1 .

Le relais 8 peut être commandé par un récepteur radio 16 muni d'une antenne recevant les signaux produits par un émetteur 17 ( figure 7).

Enfin , à la sensation de froid , s'ajoute le bruit de fonctionnement de l'électro-valve 11 , le bruit d'éjection de la substance 14 , ainsi que l'action mécanique du jet de substance sur la peau , tous ces éléments contribuant à faire cesser les aboiements du chien . Toutefois, on peut ne retenir dans la réalisation du dispositif que la sensation de froid pour provoquer 1' arrêt des aboiements , ou une combinaison de ces effets.

Le réservoir 12 peut être constitué par une bonbonne démontable que l'on fixe sur le dispositif ou par un réservoir fixé intégré au dispositif et muni d'une valve de remplissage 18 .

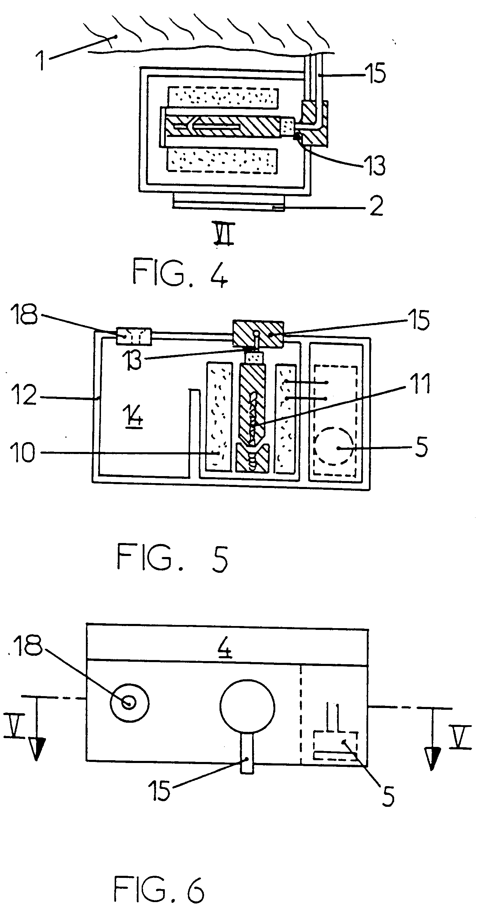

Dans l'exemple illustré sur la figure 5, l'électrovanne 11 des moyens actifs est constituée par un électro-aimant , lui-même constitué par une bobine 10 d'un noyau fixe , par un circuit magnétique , par un ressort et un noyau mobile ,muni , à son extrémité , d'un tampon souple fermant l'ajutage 13 par l'action du ressort et de la pression dans le réservoir.

Le fonctionnement est le suivant :
Lorsque le chien 1 porte le collier 2, équipé du coffret 3 , chaque déclenchement de l'électrovalve 11 provoque l'éjection , par la buse 15 , d'une partie de la substance 14 contenue dans le réservoir 12, partiellement vaporisée , détendue , et donc froide , la substance ainsi éjectée pouvant arriver sur la peau du chien et continuer de s'y vaporiser , provoquant la sensation de froid et mécanique d'écoulement d'un fluide sur la peau , soit être canalisée par la buse ailleurs que sur la peau du chien , , la buse seule refroidie provoquant la sensation de froid , et dans tous les cas ,un bruit audible par le chien 1 , bruit d'écoulement turbulent de la substance 14.
- Si le micro 5 et l'amplificateur 7 sont réglés de façon à ne prendre en compte que les aboiements du chien 1 , l'émission de la substance 14 se fera à chaque tentative d'aboiement du chien 1 .
- Si le dispositif comporte un récepteur radio 16 commandant le relais 8 ,l'émission de substance 14 a lieu chaque fois que l'émetteur radio 19 est actionné par le dresseur 20 .Bien entendu , on ne quitte pas le cadre de l'invention , en remplaçant l'électrovalve 11 et sa bobine 10 , par une électrovalve capable d'assurer la même fonction , électrovalve à pincement par exemple .

Il reste bien entendu que le coffret selon l'invention peut être fixé sur le chien par tout moyen et à des emplacements divers . En particulie , le collier peut être réalisé sous forme de sangle , de harnais ou autre . Dans l' exemple illustré sur les figures 1 et 7 , on a supposé que le coffret est fixé au cou du chien : cette fixation pourrait , bien entendu , être réalisée à tout autre emplacement du corps de l'animal , notamment en fonction de ses réactions , ou en fonction du dressage à réaliser .Il s'agit là d'une caractéristique importante que l'invention permet de réaliser.

## Revendications

1. Dispositif destiné à être fixé à un collier ou harnais pour chien en vue d'empêcher ses aboiements, comprenant un capteur de sons adapté à détecter les aboiements du chien et à émettre alors un signal électrique susceptible d'actionner une électrovalve (11) équipant un réservoir (12) sous pression renfermant une substance (14) susceptible d'être éjectée par une buse (15), caractérisé en ce que la buse (15) est disposée de façon à pouvoir être placée au contact de la peau du chien et permet d'éjecter une certaine quantité de la substance (14) contenue, sous forme d'un liquide en équilibre avec sa vapeur, dans le réservoir (12) sous pression susceptible d'être mis en communication avec un ajutage (13) sous l'action de l'électrovalve (11) actionnable par ledit signal électrique, la détente et la vaporisation de la substance (14) entraînant l'abaissement brusque de sa température, ainsi que de celle de la buse (15), procurant au chien, à l'endroit du contact, une sensation de froid intense.

2. Dispositif selon la revendication 1, caractérisé en ce qu'il comprend un circuit électronique incorporant le capteur de sons, lequel comprend un microphone (5) relié à un filtre (6) lui-même relié à un amplificateur à seuil réglable (7) qui actionne, dans le cas où le bruit capté par le microphone (5) est assez intense, un circuit calibrateur (8) qui délivre un signal de durée déterminée et réglable, commandant un circuit de puissance (9) apte à envoyer dans la bobine (10) de l'électrovalve (11) un courant électrique suffisant pour actionner ladite électrovalve (11) pendant le temps fixé par le circuit calibrateur (8).

3. Dispositif selon la revendication 2, caractérisé en ce qu'un récepteur radio (16) incorporé au collier (2) actionne le circuit calibrateur (8) lorsqu'il est excité par le fonctionnement d'un émetteur radio (19), le dispositif pouvant alors être utilisé par un dresseur (20), pour commander à distance le dressage du chien.

4. Dispositif selon l'une quelconque des revendications précédentes, caractérisé en ce que le circuit électronique (5 à 10) est alimenté par une pile (4).

5. Dispositif selon l'une quelconque des revendications précédentes, caractérisé en ce que la substance (14) est de l'air comprimé.

## Claims

1. Device to be fixed to a dog collar or harness so as prevent the dog from barking and including a sound sensor adapted to detect the barkings of the dog and to then emit an electric signal able to activate an electrovalve (11) equipping an under-pressure tank containing a substance (14) able to be ejected by a nozzle (15), wherein the nozzle (15) is disposed in such a way as to be able to be placed in contact with the skin of the dog and is able to eject a certain quantity of the substance (14) contained in the form of a liquid at equilibrium together with its vapour in the under-pressure tank (12) able to be placed in communication with an adjustable device (13) under the action of the electrovalve (11) able to be activated by said electric signal, the pressure reduction and vaporization of the substance (14) resulting in the sudden fall of its temperature and that of the nozzle, thus giving the dog at the place of contact a sensation of intense cold.

2. Device according to claim 1, wherein it includes an electronic circuit incorporating the sound sensor which includes a microphone (5) connected to a filter, itself connected to an amplifier with an adjustable threshold and which, when the noise picked up by the microphone is relatively intense, activates a calibration circuit (8) which delivers an adjustable signal having a specific duration and controlling a power circuit (9) able to send into the coil of the electrovalve (11) a sufficient electric current to activate said electrovalve (11) during the time fixed by the calibration circuit (8).

3. Device according to claim 2, wherein a radio receiver (16) incorporated in the collar (2) activates the calibration circuit (8) when it is excited by the functioning of a radio emitter (19), the device then able to be used by a trainer (20) so as to long-distance control the training of the dog.

4. Device according to any one of the preceding claims, wherein the electronic circuit (5 to 10) is fed by a battery (4).

5. Device according to any one of the preceding claims, wherein the substance (14) is compressed air.

## Patentansprüche

1. Vorrichtung zum Befestigen an einem Halsband oder Geschirr für Hunde, um deren Bellen zu verhindern, bestehend aus einem Schallaufnehmer zum Aufnehmen des Hundegebells und entsprechenden Senden eines elektrischen Signals, durch das ein Elektroventil (11) an einem Druckbehälter (12) ausgelöst wird, in dem eine Substanz (14) enthalten ist, die durch eine Düse (15) ausgesprüht werden kann, **dadurch gekennzeichnet, daß** die Düse (15) so angebracht ist, daß sie in direkter Berührung mit der Haut des Hundes ist und eine bestimmte Menge der Substanz (14) ausgesprüht werden kann, welche in flüssiger Form in dem Druckbehälter (12) enthalten ist und bei Betätigung des Elektroventils (11) durch das o.a. elektrische Signal über ein Ansatzrohr (13) freigesetzt werden kann, wobei durch das Freisetzen und Zerstäuben der Substanz (14) ein plötzlicher Temperaturabfall der Substanz und der Düse (15) erfolgt, wodurch der Hund an der Berührungsstelle ein starkes Kältegefühl empfindet.

2. Vorrichtung nach Patentanspruch 1, dadurch gekennzeichnet, daß sie eine elektronische Schaltung mit dem Schallaufnehmer enthält, welcher aus einem Mikrofon (5) und einem Filter (6) besteht, das wiederum an einen Verstärker (7) mit verstellbarem Pegel angeschlossen ist, der bei Aufnahme eines relativ starken Schalls über das Mikrofon (5) eine Kalibrierschaltung (8) ausgelöst wird, durch die ein Signal mit bestimmter und verstellbarer Länge erzeugt wird, durch das ein Leistungskreis (9) gesteuert wird, der einen elektrischen Strom in der Spule (10) des Elektroventils (11) anlegt, durch den das Elektroventil (11) während der von der Kalibrierschaltung (8) bestimmten Zeit betätigt wird.

3. Vorrichtung nach Patentanspruch 2, dadurch gekennzeichnet, daß über einen im Halsband (2) eingebauten Funkempfänger (16) eine Kalibrierschaltung (8) ausgelöst wird, wenn diese durch einen Funksender (19) erregt wird, womit die Vorrichtung von einem Dresseur (20) verwendet werden kann, um die Dressur des Hundes ferngesteuert vorzunehmen.

4. Vorrichtung nach einem der vorhergehenden Patentansprüche, dadurch gekennzeichnet, daß die Elektronikschaltung (5 - 10) über eine Batterie (4) gespeist wird.

5. Vorrichtung nach einem der vorhergehenden Patentansprüche, dadurch gekennzeichnet, daß die Substanz (14) aus Flüssigluft besteht.
